# EUROPEAN PATENT APPLICATION

(11) **EP 4 564 660 A1**
(43) Date of publication of application: **04.06.2025**
(21) Application number: 23212656.5
(22) Date of filing: 28.11.2023
(51) Int. Cl.: H02M 7/483, H02J 3/18

(54) **GRID-CONNECTABLE MULTILEVEL CONVERTER, MULTILEVEL CONVERTER SYSTEM AND CHARGING SYSTEM**

(71) Applicant: Rimac Technology LLC, 10431 Sveta Nedelja (HR)
(72) Inventor: Kacetl, Jan, 530 02 Pardubice (CZ); Kacetl, Tomás, 530 03 Pardubice (CZ); Moorhouse, Roger, OX28 4EW Oxfordshire (GB)
(74) Representative: Sonnenberg Harrison Partnerschaft mbB

(57) **Abstract**

What is proposed is a grid-connectable multilevel converter (112) configured for at least temporarily interfacing a three-phase power grid (106) and/or for at least temporarily providing a direct current mode; the multilevel converter (112) comprising: at least a first modular energy storage string having a plurality of energy sources and at least one power converter module, the at least one power converter module comprising at least two switching elements; the at least two switching elements being configured for selectively switching each of the plurality of energy sources to operate the at least first modular energy storage string in an alternating current mode, in which the at least first modular energy storage string is connectable to a first phase of the three-phase power grid (106); and the at least two switching elements being configured for selectively switching each of the plurality of energy sources to operate the at least first modular energy storage string in the direct current mode.

## Description

The present invention relates to a grid-connectable multilevel converter, a multilevel converter system and a charging system.

The demand for reliable and efficient energy storage solutions has grown significantly with the increasing integration of (renewable) energy sources and the need for grid stability. In this context, the concept of an AC battery operated on a grid, also known as a battery-supplied multilevel converter, has emerged as a promising technology. Such a system combines the benefits of energy storage batteries with the flexibility and functionality of a multilevel converter, enabling seamless integration and operation within an alternating current (AC) power grid.

The battery-supplied multilevel converter functions as a bridge between the grid and the energy storage battery, facilitating bidirectional power flow and ensuring optimal utilization of stored energy. By utilizing a multilevel converter architecture, which consists of multiple power converter modules with varying voltage levels, the system achieves enhanced voltage quality, reduced harmonic distortion, and improved power flow control.

The core component of this system is the energy storage battery, which serves as a reliable and efficient source of electricity. The battery is designed, for example, to store excess energy during periods of low demand or high renewable energy generation, and subsequently release the stored energy during peak demand or periods of low energy availability. By operating within the AC grid, the battery-supplied multilevel converter provides dynamic support to the grid, contributing to grid stability, load balancing, and frequency regulation.

Also, in the realm of electric vehicles (EVs) and their charging infrastructure, the demand for faster charging times and increased driving range continues to drive innovation. One essential component of this ecosystem is the DC charger, which allows for efficient and rapid charging of EV batteries. To optimize the charging process, conventional battery boosters have been developed as a key technology to enhance the performance of DC chargers.

Conventional battery boosters for DC chargers are devices specifically designed to augment the charging capabilities of the DC charging system. They are utilized to overcome the limitations associated with power distribution networks, grid constraints, and the capacity of the charging station infrastructure. By integrating a battery booster into the charging system, the charging power can be significantly increased, leading to reduced charging times and improved user convenience.

The conventional battery booster operates by storing energy from the grid during periods of low demand or excess electricity generation. This stored energy is then utilized to provide an additional power boost during high-demand periods or when rapid charging is required. By effectively managing the power flow and providing a temporary energy buffer, battery boosters enable the DC charger to operate at higher power levels without overloading the grid or compromising the stability of the power supply.

This technology not only benefits EV owners by reducing charging time and increasing the availability of charging stations, but also addresses the challenges associated with the overall electricity grid infrastructure. Conventional battery boosters for DC chargers play a crucial role in the transition to sustainable transportation by optimizing the charging process, improving the charging experience, and facilitating the widespread adoption of electric vehicles.

However, conventional battery boosters for DC chargers usually connect the to be charged battery directly to a DC link. Such a configuration leads to harmful micro cycling which leads to a decreasing battery lifetime. Alternatively, the battery is connected via a DC/DC converter, that is usually configured as a cascaded DC/DC converter. However, such cascaded DC/DC converters suffer from low efficiency and a therefore not preferably for the overall efficiency of the provided boosting function. Furthermore, the conventional DC charger topology does not allow bidirectional power / energy flow.

Against this background, it is an object to provide an improved multilevel converter, and/or a corresponding improved multilevel converter system. Also, it is an object to provide an improved charging system.

The object is attained by a grid-connectable multilevel converter having the features of claim 1. Furthermore, the object is attained by a multilevel converter system having the features of claim 12. Also, the object is attained by a charging system having the features of claim 13.

Advantageous embodiments of the present disclosure are the subject matter of the dependent claims. Any and all combinations of at least two features disclosed in the description, the claims, and/or the figures fall within the scope of the present disclosure. Naturally, the explanations given in connection with the grid-connectable multilevel converter equivalently relate to the multilevel converter system and/or the charging system according to the present disclosure without being mentioned redundantly in its/their context. In particular, linguistically common rephrasing and/or an analogous replacement of respective terms within the scope of common linguistic practice, in particular the use of synonyms backed by the generally recognized linguistic literature, are, of course, comprised by the content of the disclosure at hand without every variation having to be expressly mentioned.

In accordance with a first aspect, a grid-connectable multilevel converter configured for at least temporarily interfacing a particularly three-phase power grid and/or for at least temporarily providing a direct current mode. The multilevel converter comprising at least a first modular energy storage string having a plurality of energy sources and at least one power converter module, the at least one power converter module comprising at least two switching elements. The at least two switching elements being configured for selectively switching each of the plurality of energy sources, preferably with respect to one another, to operate the at least first modular energy storage string in an alternating current mode, in which the at least first modular energy storage string is connectable to a first phase of the particularly three-phase power grid. Furthermore, the at least two switching elements being configured for selectively switching each of the plurality of energy sources to operate the at least first modular energy storage string in the direct current mode.

The present application thus relates to a grid-connectable multilevel converter designed to interface with a particularly three-phase power grid and provide a direct current mode when needed. The multilevel converter incorporates a first modular energy storage string consisting of multiple energy sources and at least one power converter module. The power converter module comprises a set of at least two switching elements. These switching elements are preferably strategically configured to selectively switch each of the energy sources, allowing the first modular energy storage string to operate in either an alternating current mode, where it can be connected to a first phase of the particularly three-phase power grid, or in a direct current mode. Thus, herein, a technical solution for the above-identified object is provided. Particularly, the grid-connectable multilevel converter can be operated on the grid and can provide a power boosting and/or charging function, preferably for multiple different and or selectable voltage levels, in the DC mode. Thereby, it becomes possible to operate the grid-connectable multilevel converter on the grid in an AC mode and/or for charging and/or discharging and/or boosting in the DC mode. Thereby, the herein presented multilevel converter preferably provides a direct DC link to the to be charged or charge-boosted electrical energy storage. Thus, no additional power conversion, such as a DC/DC converter, is needed. The herein presented multilevel converter is preferably a single star multilevel converter and/or a modular multilevel converter. Thus, particularly due to the at least two switching elements, a circuit of the plurality of energy sources may be reconfigurable for different purposes, such as an AC grid operation and/or a DC charging boost, preferably providable for different voltage levels. The AC grid operation may be to provide a support service and/or an energy trading function and/or a self-charging function for the multilevel converter. The claimed grid-connectable multilevel converter presents a novel and efficient solution for integrating energy sources into existing power grids while enabling flexible operation modes.

The claimed multilevel converter is preferably configured to be operated on the particularly three-phase power grid and furthermore, in the direct current mode, where the multilevel converter is preferably reconfigurable such that at least one phase can be disconnected from the particularly three-phase power grid to provide at least two direct current (DC) terminals. In other words, the grid-connectable multilevel converter can at least temporarily be configured to interface the power grid and/or to provide a DC output in the direct current mode (also named DC mode hereinafter). In such a DC mode, the grid-connectable multilevel converter may be preferably configured to provide a power boosting function and/or a charging function for a direct current charging operation of an electrical DC-load connectable to the at least two DC terminals of the grid-connectable multilevel converter.

The power grid may be considered as a single- or multiphase power grid. Thus, the term "three-phase power grid" may be replaceable with single- or multiphase power grid without leaving the claimed scope. Such a multiphase power grid may have at least two phases. Thus, the claimed three-phase power grid should not be understood as to narrow down the claimed scope.

It should be noted that the plurality of energy sources may preferably be at least temporarily connected in series. The plurality of energy sources may at least temporarily be connected in series positive and/or in series negative. Also, particularly depending on the setup of the power converter module, the plurality of energy sources may at least temporarily be connected in parallel or in a bypass connection. Such a setup of a power converter module may comprise at least three switches to provide parallel connection. The connection options may depend on the topology of the power converter module and/or the number of switching elements. Topologies with two switching elements may be configured for series positive and/or bypass connection. Topologies with three switching elements may be configured for parallel connection, particularly preferable with single polarity. Topologies with four switching elements may be configured for series positive, series negative and/or bypass connection. Topologies with five or more switching elements may be configured for series positive, series negative, bypass and/or parallel connection. The energy source may be any kind of energy source, like, for example, a battery and/or a photovoltaic cell and/or a fuel cell and/or an electromechanical power converter and/or a capacitive energy source.

"Grid-connectable multilevel converter" preferably refers to a device designed to facilitate the connection and/or interaction between a power grid and an energy storage system, preferably allowing bidirectional power flow and/or the exchange of electrical energy. The converter is preferably capable of adapting to the voltage and/or frequency requirements of the power grid, preferably enabling seamless integration and/or operation.

"Three-phase power grid" preferably refers to a power distribution system consisting of three alternating current (AC) voltage sources, preferably generated and/or transmitted at 120 degrees phase separation from each other. Of course, the phase power grid may have less than three phases, for example one or two phases, or more than three phases. The three-phase power grid is a common configuration used for large-scale power transmission and/or distribution, preferably providing efficient and balanced power delivery.

"Direct current mode" preferably refers to a mode of operation where the multilevel converter supplies and/or accepts direct current (DC) power. In this mode, the energy sources within the multilevel converter are preferably configured to provide and/or receive a continuous flow of electric current with a constant polarity.

"First modular energy storage string" preferably refers to a set of interconnected energy sources (or energy storage units) arranged in a modular fashion. The plurality of energy sources preferably collectively forms a primary energy storage/delivery component within the multilevel converter. The plurality of energy sources is preferably designed to store and/or provide electrical energy for use and power support as required.

"Energy sources" preferably refer to the individual components or units within the first modular energy storage string that store and/or deliver electrical energy. These sources can include batteries, supercapacitors, or any other energy storage devices capable of storing and delivering electrical power.

"Power converter module" preferably refers to a module within the multilevel converter that facilitates the conversion and/or control of electrical power. It includes circuitry, such as switching elements, to manipulate the flow of electrical energy and regulate voltage and current levels.

"Switching element" preferably refers to electronic devices, such as transistors or thyristors, used within the power converter module to control the flow of electric current. These elements can be turned on or off selectively to enable or interrupt the current path and facilitate the desired energy transfer or conversion.

"Alternating current mode" preferably refers to a mode of operation where the multilevel converter operates in synchrony with the alternating current (AC) waveform of the power grid. The switching elements are preferably configured to selectively switch the energy sources, preferably allowing the multilevel converter to supply and/or receive AC power that preferably matches the characteristics of the grid's AC voltage and/or frequency.

"Connectable to a first phase of the three-phase power grid" preferably refers to the capability of the first modular energy storage string to be electrically connected to one of the three phases of the three-phase power grid. This connection preferably enables the multilevel converter to interface with the grid, exchange power, and/or contribute to grid operations while maintaining synchronization with the grid's voltage and/or phase.

In an embodiment, the at least two switching elements being configured for selectively switching each of the plurality of energy sources, preferably with respect to one another, at least temporarily in series positive and/or in series negative and/or in a positive bypass state and/or in a negative bypass state and/or in parallel to operate the at least first modular energy storage string in an alternating current mode. Alternatively or additionally, the at least two switching elements being configured for selectively switching each of the plurality of energy sources at least temporarily in series positive and/or in series negative and/or in a positive bypass state and/or in a negative bypass state and/or in parallel to operate the at least first modular energy storage string in the direct current mode. Of course, the at least one power converter module may have a switch configuration with more than two switches. "Series positive/negative" preferably refers to that the switching elements allow the energy sources to be connected in series positive or series negative configurations. Series positive preferably refers to connecting the positive terminals of one energy source, i.e., of the first module, to negative terminal of a neighboring energy source, i.e., of the second module. Series negative preferably refers to connecting the negative terminals of one energy source, i.e., of the first module, to positive terminal of a neighboring energy source, i.e., of the second module.

"Positive bypass/negative bypass" preferably refers to that the switching elements enable a positive bypass state or a negative bypass state. Positive bypass preferably means that a positive current rail for bypassing an energy source, i.e., of the first or the second module, is used. Negative bypass preferably means that a negative current rail for bypassing an energy source, i.e., of the first or the second module, is used. It may applies for both current polarities. "Parallel operation" preferably refers to that the switching elements facilitate parallel connection of the energy sources, i.e., of the first and the second module. This preferably means that the positive terminals of the sources can be connected, and the negative terminals can be connected, allowing them to work collectively.

In a further embodiment, the multilevel converter further comprising at least a second modular energy storage string and/or a third modular energy storage string, the second and/or the third modular energy storage string being equivalently configured to the at least first modular energy storage string, wherein, in the alternating current mode, the second modular energy storage string is connectable to a second phase of the particularly three-phase power grid, and/or wherein, in the alternating current mode, the third modular energy storage string is connectable to a third phase of the three-phase power grid; wherein, in a direct current mode, the first and/or the second and/or the third modular energy storage string is/are configured for providing a charging function for a direct current charging operation and/or a power boosting function for a direct current charging operation, respectively or cumulatively. "Charging function" preferably refers to that the first and/or second and/or third modular energy storage string is/are configured to provide a charging function. The charging function preferably refers to a self-charging function. This preferably means they are designed to receive electrical energy from an external source and store it within the energy storage modules. The claim doesn't specify the specific nature of the charging operation or the source of the electrical energy. "Power boosting function" preferably refers to that the first and/or second and/or third modular energy storage string is/are also configured to provide a power boosting function. This preferably implies that the energy storage strings can increase the output current and/or the electric power of a charger unit that is used for charging an electrical load. "Direct current charging operation" preferably refers to that the charging and/or power boosting functions of the modular energy storage strings are preferably intended for direct current (DC) charging operations, respectively. This preferably suggests that the provided multilevel converter is designed to facilitate the charging of DC-powered devices or systems. Cumulative functionality preferably means that the features mentioned above, including the charging function and the power boosting function, can be utilized individually or in combination. The claim indicates that the first, second, and third energy storage strings can perform these functions separately or together, allowing for flexibility and adaptability in different charging scenarios and/or voltage levels for charging.

The second modular energy storage string preferably having a plurality of energy sources and at least one power converter module, the at least one power converter module preferably comprising at least two switching elements. The at least two switching elements being configured for selectively switching each of the plurality of energy sources, preferably with respect to one another, to operate the at least second modular energy storage string in an alternating current mode, in which the at least second modular energy storage string is connectable to a second phase of the particularly three-phase power grid. Furthermore, the at least two switching elements being configured for selectively switching each of the plurality of energy sources to operate the at least second modular energy storage string in the direct current mode.

The third modular energy storage string preferably having a plurality of energy sources and at least one power converter module, the at least one power converter module preferably comprising at least two switching elements. The at least two switching elements being configured for selectively switching each of the plurality of energy sources, preferably with respect to one another, to operate the at least third modular energy storage string in an alternating current mode, in which the at least third modular energy storage string is connectable to a third phase of the particularly three-phase power grid. Furthermore, the at least two switching elements being configured for selectively switching each of the plurality of energy sources to operate the at least third modular energy storage string in the direct current mode.

In a further embodiment, the first modular energy storage string is connectable or connected with the second modular energy storage string via at least a first string contactor. Alternatively, or additionally, the second modular energy storage string is connectable or connected with the third modular energy storage string via at least a second string contactor. Alternatively, or additionally, the first modular energy storage string is connectable or connected with the third modular energy storage string via at least a third string contactor. Alternatively, or additionally, the first to the third modular energy storage string is connectable or connected to a common star point. Here, a contactor may also describe any kind of switch and/or any kind of switch matrix suitable for performing the connection between the respective strings. It may be considered that if the first and the second string contactors are closed, a connection to a common star point is achieved. However, if no optional string contactors are present, the first and/or the second and/or the third modular energy storage may be permanently connected to a common star point, meaning that the first and/or the second and/or the third modular energy storage may be provided in star point connection configuration. The connection between the first and the second phase string may be performed via the common star point. A (common) star point, in electrical systems, preferably refers to a central reference or connection point. It is preferably used in configurations where multiple components or elements are connected in a star or radial pattern. In this context, the first and/or second and/or third modular energy storage string can be interconnected or linked to a shared central connection point known as the common star point. This configuration preferably allows for the consolidation or convergence of electrical connections from these energy storage strings. It preferably enables them to share a common reference point, which may have various advantages in terms of electrical distribution, control, and/or monitoring within the multilevel converter and/or multilevel converter system and/or charging system.

In a further embodiment, the first modular energy storage string is connectable in series with at least the second modular energy storage string via at least a fourth string contactor. Alternatively, or additionally, the second modular energy storage string is connectable in series and/or in parallel with at least the third modular energy storage string via at least a fifth string contactor. It may also be possible that the first modular energy storage string is connectable in series with at least the third modular energy storage string via a sixth string contactor. Here, a contactor may also describe any kind of switch and/or any kind of switch matrix suitable for performing the connection between the respective strings.

In a further embodiment, the at least first modular energy storage string is connectable to the first phase of the three-phase power grid by a preferably phase-individual first grid contactor; and/or wherein the at least second modular energy storage string is connectable to the second phase of the three-phase power grid by a preferably phase-individual second grid contactor; and/or wherein the at least third modular energy storage string is connectable to the third phase of the three-phase power grid by a preferably phase-individual third grid contactor. Here, a contactor may also describe any kind of switch and/or any kind of switch matrix suitable for performing the connection between the respective strings. According to said embodiment, the respective grid contactor is preferably placed at the top grid rails of the respective phase of the preferably three-phase power grid. By said placement, copper savings can be achieved in comparison to a placement of the contactors and a grid connecting side of the at least one multilevel converter and/or the at least one multilevel converter system. Of course, the multilevel converter may have more than three phases, particularly if the power grid comprises more than three phases as well.

In a further embodiment, the first modular energy storage string comprises at least two terminal connections, the terminal connections configured for, in the direct current mode, providing a direct current input and/or output, preferably for a power boosting and/or charging and/or discharging function; and/or wherein the second modular energy storage string comprises at least two terminal connections, the terminal connections configured for, in the direct current mode, providing a direct current output, preferably for the power boosting and/or charging and/or discharging function; and/or wherein the third modular energy storage string comprises at least two terminal connections, the terminal connections configured for, in the direct current mode, providing a direct current output, preferably for the power boosting and/or charging and/or discharging function. Multiplexing and/or routing may be used to change between terminal connections, in particular, if a to be provided voltage level between two respective terminal connections may be changed. "Terminal connections" preferably refers to specific points and/or connectors on the first and/or second and/or third modular energy storage string where external connections or connections to an exterior of the multilevel converter can be made. The claim indicates that there are at least two terminal connections, preferably suggesting there are two separate points on the respective string for making external connections. "Direct current output" preferably refers to the terminal connections on the first and/or second and/or third modular energy storage string that are configured to provide a direct current (DC) output. In the direct current mode of operation, the respective string is designed to deliver electrical energy in the form of direct current. This output can be used to power and/or boost-charge and/or charge other devices or systems that require DC input. By having at least two terminal connections on the respective modular energy storage string, the system allows for the transfer of direct current output to external components or devices, preferably enabling the utilization of the stored energy in a direct current mode of operation.

In a further embodiment, a respective first terminal connection of the at least two terminal connections, particularly per string, is provided on a grid connecting side of the respective first and/or second and/or third modular energy storage string, and wherein a respective second terminal connection of the at least two terminal connections is provided at the common star point. In other words, at least one of at least two respective terminal connections per string may be arranged at the common star point, whereas the other one of the at least two respective terminal connections per string may be arranged at a grid-side of the respective modular energy storage string. "Grid connecting side" preferably means that the respective terminal connection is located on the side of the energy storage string that is connected or connectable to the power grid.

In a further embodiment, each of the at least two terminal connections of the respective first and/or second and/or third modular energy storage string is operable via a respective terminal contactor. Here, a contactor may also describe any kind of switch and/or any kind of switch matrix suitable for performing the connection between the respective strings. "Terminal contactor" preferably refers to a device or component that enables the operation or control of the terminal connections. Each of the at least two terminal connections in the respective modular energy storage string is operable via a respective terminal contactor. This means that there may be a contactor preferably associated with each terminal connection, preferably allowing for independent operation and/or control of the respective terminal connection.

In a further embodiment, the first energy storage string comprises a first grid filter arranged between the first grid contactor and a respective first one of the preferably series connected plurality of energy sources of the first energy storage string; and/or wherein the second energy storage string comprises a second grid filter arranged between the second grid contactor and a respective first one of the preferably series connected plurality of energy sources of the second energy storage string; and/or wherein the third energy storage string comprises a third grid filter arranged between the third grid contactor and a respective first one of the preferably series connected plurality of energy sources of the third energy storage string. "Grid filter" preferably refers to a component that is positioned between the first grid contactor and a particular energy source within the first energy storage string. The grid filter is preferably designed to filter and/or condition the electrical signals and/or power flowing between the grid contactor and the specified energy source and/or string. These filters may be used to remove noise and/or harmonics and/or other undesirable components from an electrical signal and/or energy flow. "Grid contactor" preferably refers to a device and/or component that enables the connection and/or disconnection of the respective energy storage string to or from the power grid. It preferably controls the electrical connection between the respective energy storage string and the power grid.

In a further embodiment, at least one terminal filter is provided on at least one of the terminal connections of the respective first and/or second and/or third modular energy storage string.

In a further embodiment, at least one of the least two terminal connections of the first and/or second and/or third modular energy storage string is connected to at least partly bypass the first and/or second and/or third grid filter. In other words, the bypass configuration may allow the electric current to at least partly bypass or at least partly avoid the respective filter in the circuit. In this case, at least one of the terminal connections associated with the first and/or second and/or third modular energy storage string may be connected in a way that partially or completely bypasses the first and/or second and/or third grid filter. This means that the electric current can flow directly from the terminal connection to another part of the circuit of the multilevel converter without passing through the respective grid filter or only by passing through a part of the respective grid filter. It should be understood that the first and/or second and/or third grid filter may only partly be bypassed. Grid filters may be used for filtering or may be bypassed depending on the operating mode, in particular, a modulating mode or a stable mode. The modulating operating mode may have an alternating output voltage and therefore may require use of filters. During the stable operating mode, the stable operating mode having a constant or only slowly varying output voltage, the filters may be bypassed. It should be noted that the grid filters may be designed to filter out modulation noise, which may be the same in every phase or string, particularly when connected in series. Therefore, connecting three filters in series may not be required, as it may add additional conduction and core losses to the overall system. In such a configuration, the respective grid-connecting side terminal connection may be placed such that only a part of the first and/or second and/or third grid filter is utilized. In such a configuration, not the whole respective grid filter, but only a part of it is used for the direct current mode operation. A main advantage of providing the option for bypassing the first and/or second and/or third grid filter is that, depending on the setup and/or configuration of the multilevel converter and/or respective energy storage string, string specific filters and/or string individual filters may be used. Thus, not every energy storage string needs to be provided with the same filter. This may be advantageous regarding capital costs. In addition, bypassing redundant filters or filter stages may reduce conduction and/or core losses.

In a further embodiment, in the alternating current mode, the at least first modular energy storage string is configured to be run in an energy trading mode, when the at least first modular energy storage string is connected to the first phase of the three-phase power grid,
wherein, in the energy trading mode, electric energy is transferable and/or interchangeable between the plurality of energy sources of the at least first modular energy storage string and at least the first phase of the three-phase power grid; and/or wherein, in the alternating current mode, the at least first modular energy storage string is configured to be run in a grid support mode, when the at least first modular energy storage string is connected to the first phase of the three-phase power grid, wherein, in the grid support mode, electric energy is transferable and/or interchangeable between the plurality of energy sources of the at least first modular energy storage string and at least the first phase of the three-phase power grid for supporting a grid frequency control operation and/or for supporting a reactive power compensation. It should be understood that these features equally apply for the second and/or third modular energy storage string. The particularly three-phase grid may be part of a charging system including at least one of the claimed multilevel converters.

In a further embodiment, in the alternating current mode, the at least first modular energy storage string is configured to be run in a self-charging mode, when the at least first modular energy storage string is connected to the first phase of the three-phase power grid, wherein, in the self-charging mode, electric energy is transferable from the at least the first phase of the three-phase power grid to the plurality of energy sources of the at least first modular energy storage string.

In accordance with a second aspect, a multilevel converter system is provided. The multilevel converter system comprising at least two multilevel converters as claimed herein before and hereinafter. The at least two multilevel converters are connectable via at least one multilevel converter contactor. Here, a contactor may also describe any kind of switch and/or any kind of switch matrix suitable for performing the connection between the respective strings. Considering the technically smallest possible entity, the at least one multilevel converter contactor may be configured to connect the respective first strings of the respective multilevel converters together.

In an embodiment of the multilevel converter system, the at least one multilevel converter contactor is configured to connect the at least two multilevel converters to the common star point, wherein, in the direct current mode, an output voltage of a common direct current output of the at least two multilevel converters is increased, particularly for providing a power boosting and/or charging function.

In accordance with a third aspect, a charging system for direct current charging or discharging of an electrical energy storage of at least one electrical consumer, preferably an electric vehicle, is provided. The system comprises the at least one electrical consumer including the electrical energy storage; a preferably three-phase power grid; a front-end converter unit connectable to the preferably three-phase power grid and configured for converting and/or rectifying an alternating current of the preferably three-phase power grid to a direct current used for charging the electrical energy storage; and a direct current charging unit connectable to the front-end converter unit; the electrical energy storage being at least temporarily connectable to the direct current charging unit to perform a direct current charging operation; and at least one multilevel converter according to any one of the herein presented embodiments and/or at least one multilevel converter system according to any one of the herein presented embodiments. It should be understood that the energy flow of the charging system may be bidirectional. Thus, energy can be charged into the electrical energy storage and/or can be discharged from the electrical energy storage, for example to provide said discharge energy to at least one phase of a preferably three-phase grid. For example, the charging system, in particular, the electrical energy storage, may get charged from any suitable direct current (DC) source, such as a power bank or a power wall or the like, wherein said charging energy is directly or indirectly provided to the at least one phase of the preferably three-phase grid. In such a configuration, the at least one multilevel converter and/or the at least one multilevel converter system may be configured to provide said energy flow to the at least one phase of the preferably three-phase grid in an alternating current configuration. This may be considered as a reversal mode, where the at least one multilevel converter and/or the at least one multilevel converter system converts and/or transfers and/or pushes energy from the electrical energy storage into at least one phase of the preferably three-phase grid.

In an embodiment of the charging system, in the direct current mode, the at least one multilevel converter and/or the at least one multilevel converter system being at least temporarily connectable in parallel to the direct current charging unit for providing a power boosting function and/or a charging function for the direct current charging operation; or wherein, in the direct current mode, the at least one multilevel converter and/or the at least one multilevel converter system being at least temporarily connectable in parallel to the front-end converter unit for providing a power boosting function and/or a charging function for the direct current charging operation. The formulation "connectable in parallel" preferably means that the at least one current of the charging unit and the at least one current of the at least one multilevel converter and/or the at least one multilevel converter system are added and/or summed up together. In other words, "connectable in parallel" or "connected in parallel" means that the respective outputs of at least two devices that are connected in parallel, are in parallel connection. Alternatively, the at least one multilevel converter and/or the at least one multilevel converter system may be connected in parallel with the front-end converter. The front-end converter may be considered as a rectifier.

In an embodiment of the charging system, the system comprises a transformer unit, the transformer unit being interconnectable between the preferably three-phase power grid and the at least one multilevel converter and/or the at least one multilevel converter system. Such a transformer may be applied for galvanic isolation. Thus, such transformers may be redundant when such isolation is not required.

All aspects and embodiments as described above may be combined as deemed fit by the skilled person.

"A(n)" in the present case should not necessarily be understood to be restrictive to exactly one element. Rather, a plurality of elements, such as, for example, two, three or more, can also be provided. Any other numeral used here, too, should not be understood to the effect that there is a restriction to exactly the stated number of elements. Rather, numerical deviations upwards and downwards are possible, unless indicated to the contrary.

Further possible implementations of the invention also comprise not explicitly mentioned combinations of any features or embodiments that are described above or below with respect to the exemplary embodiments. In this case, a person skilled in the art will also add individual aspects as improvements or supplementations to the respective basic form of the invention.
Fig. 1 shows a first schematic example of a charging system;
Fig. 2 shows a second schematic example of a charging system;
Fig. 3 shows a first refinement of a multilevel converter system and a power grid;
Fig. 4 shows a further refinement of a multilevel converter system;
Fig. 5 shows a further refinement of a multilevel converter system;
Fig. 6 shows a further refinement of a multilevel converter system and a power grid;
Fig. 7 shows a further refinement of a multilevel converter system and a power grid;
Fig. 8 shows a further refinement of a multilevel converter system and a power grid;
Fig. 9 shows a further refinement of a multilevel converter system and a power grid;
Fig. 10 shows a further refinement of a multilevel converter system and a power grid;
Fig. 11 shows a further refinement of a multilevel converter system and a power grid;
Fig. 12 shows a further refinement of a multilevel converter system and a power grid;
Fig. 13 shows a further refinement of a multilevel converter system and a power grid;
Fig. 14 shows a further refinement of a multilevel converter system and a power grid;
Fig. 15 shows a further refinement of a multilevel converter system and a power grid;
Fig. 16 shows a further refinement of a multilevel converter system and a power grid;
Fig. 17 shows a further refinement of a multilevel converter system and a power grid;
Fig. 18 shows a further refinement of a multilevel converter system and a power grid;
Fig. 19 shows a further refinement of a multilevel converter system and a power grid;
Fig. 20 shows a further refinement of a multilevel converter system and a power grid;
Fig. 21 shows a further refinement of a multilevel converter system and a power grid;
Fig. 22 shows a further refinement of a multilevel converter system and a power grid;
Fig. 23 shows a further refinement of a multilevel converter system and a power grid;
Fig. 24 shows a further refinement of a multilevel converter system and a power grid;
Fig. 25 shows a further refinement of a multilevel converter system and a power grid;
Fig. 26 shows a further refinement of a multilevel converter system and a power grid;
Fig. 27 shows a further refinement of a multilevel converter system and a power grid; and
Fig. 28 shows a schematic refinement of a power converter module.

Unless indicated to the contrary, elements that are the same or functionally the same have been given the same reference signs in the figures. It should also be noted that the illustrations in the figures are not necessarily true to scale.

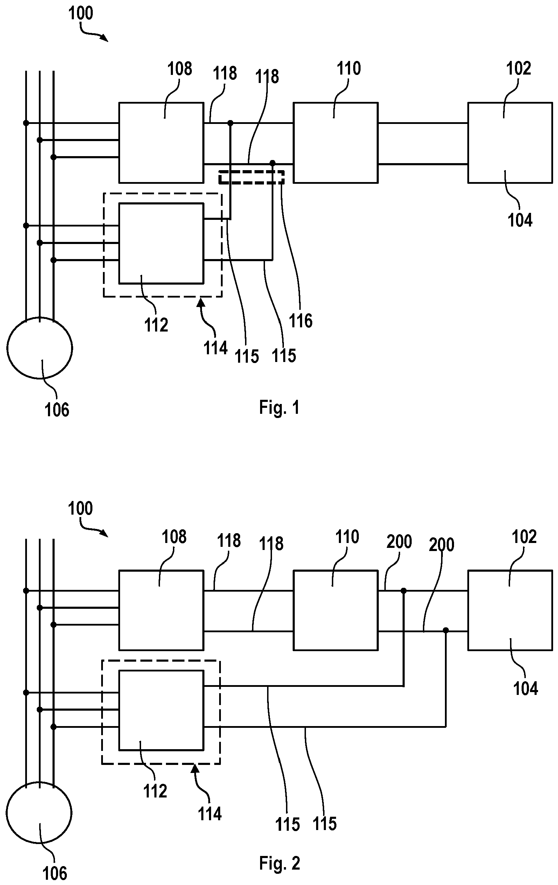

Fig. 1 shows a schematic view of a charging system 100. The charging system 100 is particularly but not exclusively used and/or suitable for direct current charging and/or discharging of an electrical energy storage 102 of at least one electrical consumer 104. The electrical consumer 104 may be a battery electric vehicle (BEV) or a hybrid electric vehicle (HEV). The energy storage 102 may be a battery, particularly a traction battery, or power wall battery.

The charging system 100 further includes a preferably three-phase power grid 106, a front-end converter unit 108 that is at least temporarily connectable to the preferably three-phase power grid 106 and configured for rectification of an alternating current of the power grid 106 and/or for inverting a DC current, preferably used for charging the electrical energy storage 102. Also, the charging system 100 may comprise a direct current charging unit 110 that may at least temporarily be connectable to the front-end converter unit 108. Of course, it shall be understood that in other embodiments, there may be more conversion stages, for example isolated DC-DC conversion by a further DC-DC converter. According to the shown refinement, the electrical energy storage 102 is at least temporarily connectable to the direct current charging unit 110 to perform a direct current charging operation for charging the electrical energy storage 102. To support and/or boost and/or at least partly substitute the direct current charging unit 110, especially during the charging operation, the charging system 100 comprises at least one multilevel converter 112 and/or at least one multilevel converter system 114 that comprises at least two multilevel converters 112. The multilevel converter 112 may be considered as an alternating current battery storage (AC battery) that is suitable for being at least temporarily switched into at least one direct current mode.

Only optionally, the charging system 100 may also include a DC/DC converter 116 that may be interconnected on an output side of the at least one multilevel converter 112 and/or the at least one multilevel converter system 114 between the at least one multilevel converter 112 and/or the at least one multilevel converter system 114 and the front-end converter unit 108.

According to Fig. 1, in a direct current mode, the at least one multilevel converter 112 and/or the at least one multilevel converter system 114, particularly, respective outputs 115 thereof, is/are at least temporarily connected in parallel to the front-end converter unit 108, particularly, to respective outputs 118 of the front-end converter unit 110, for providing a power boosting function and/or a charging function for the direct current charging operation.

According to Fig. 2, the charging system 100 is shown according to another refinement. In contrast to Fig. 1, in the direct current mode, the at least one multilevel converter 112 and/or the at least one multilevel converter system 114, particularly, the respective outputs 115 thereof, is/are at least temporarily connected in parallel to the direct current charging unit 110, particularly, to respective outputs 200 of the direct current charging unit 110, for providing a power boosting function and/or a charging function for the direct current charging operation. In said configuration, the output 200 of the direct current charging unit 110 can be directly boosted with the energy / current deliverable from the at least one multilevel converter 112 and/or the at least one multilevel converter system 114.

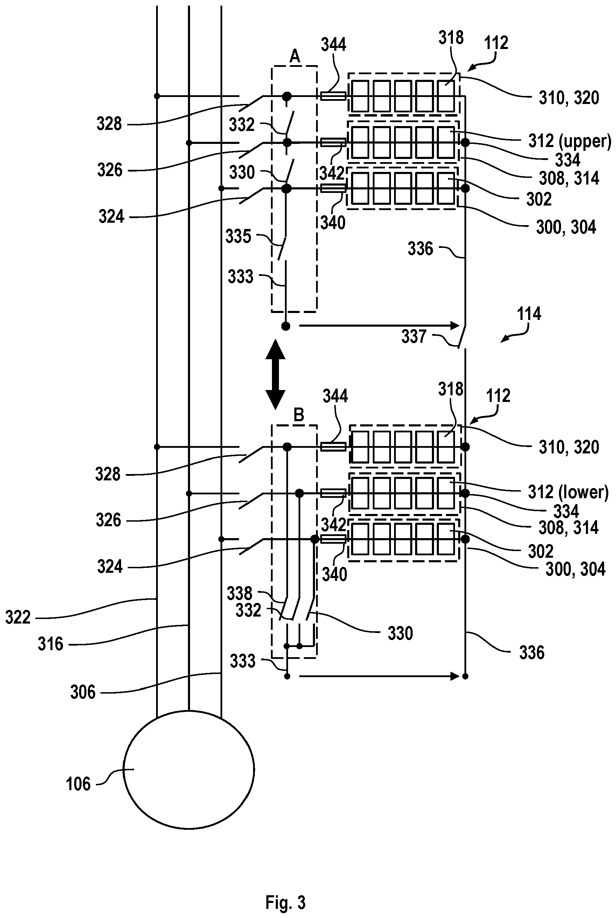

Fig. 3 shows the multilevel converter system 114 in a potential refinement. The multilevel converter system 114 comprises exemplarily two multilevel converters 112. Each of the two multilevel converters 112 is configured as a grid-connectable multilevel converter 112.

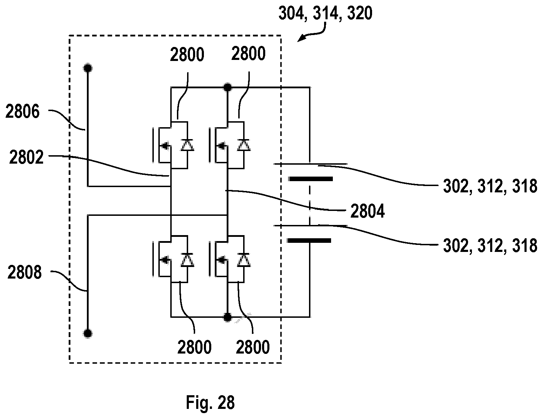

The respective multilevel converter 112 is configured for at least temporarily interfacing the preferably three-phase power grid 106 and/or for at least temporarily providing the above-indicated direct current mode. The respective multilevel converter 112 comprises at least a first modular energy storage string 300 having a plurality of energy sources 302 and at least one power converter module 304. The at least one power converter module 304 may be included in the plurality of energy sources 302. For clearness, only one of the respective energy sources per string is marked in Fig. 3. The at least one power converter module 304 comprises at least two switching elements 2800 (see description of Fig. 28 in the last paragraph of the specification for further details).

The at least two switching elements 2800 being configured for selectively switching each of the plurality of energy sources 302 to operate the at least first modular energy storage string 300 in an alternating current mode, in which the at least first modular energy storage string 300 is connectable to a first phase 306 of the three-phase power grid 106. Also, the at least two switching elements 2800 are configured for selectively switching each of the plurality of energy sources 302 to operate the at least first modular energy storage string 300 in the at least one direct current mode. The at least two switching elements 2800 are configured for selectively switching each of the plurality of energy sources 302 at least temporarily in series positive and/or in series negative and/or in a positive bypass state and/or in a negative bypass state and/or in parallel to operate the at least first modular energy storage string 300 in an alternating current mode. Alternatively or additionally, the at least two switching elements 2800 are configured for selectively switching each of the plurality of energy sources 302 at least temporarily in series positive and/or in series negative and/or in a positive bypass state and/or in a negative bypass state and/or in parallel to operate the at least first modular energy storage string 300 in the direct current mode.

The respective multilevel converter 112 further comprises at least a second modular energy storage string 308 and/or a third modular energy storage string 310. The second modular energy storage string 308 preferably having a plurality of energy sources 312 and at least one power converter module 314, the at least one power converter module 314 preferably comprising the at least two switching elements 2800 (consider Fig. 28). The at least two switching elements being configured for selectively switching each of the plurality of energy sources 312, preferably with respect to one another, to operate the at least second modular energy storage string 308 in an alternating current mode, in which the at least second modular energy storage string 308 is connectable to a second phase 316 of the particularly three-phase power grid 106. Furthermore, the at least two switching elements 2800 being configured for selectively switching each of the plurality of energy sources 312 to operate the at least second modular energy storage string 308 in the direct current mode.

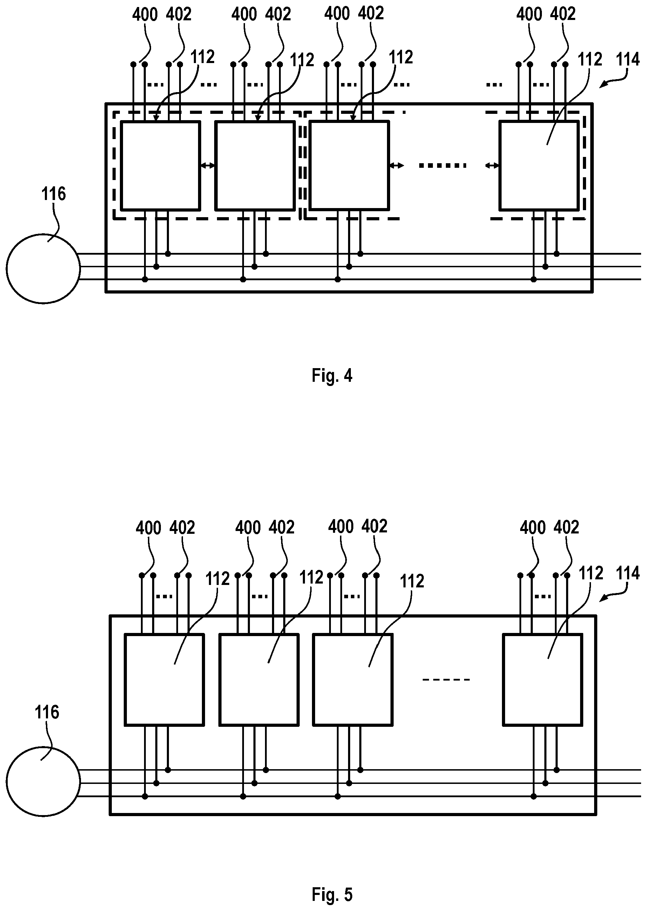

The third modular energy storage string 310 preferably having a plurality of energy sources 318 and at least one power converter module 320, the at least one power converter module 320 preferably comprising the at least two switching elements 2800 (consider Fig. 28). The at least two switching elements 2800 being configured for selectively switching each of the plurality of energy sources 318, preferably with respect to one another, to operate the at least third modular energy storage string 310 in an alternating current mode, in which the at least third modular energy storage string 310 is connectable to a third phase 322 of the particularly three-phase power grid 106. Furthermore, the at least two switching elements 2800 being configured for selectively switching each of the plurality of energy sources 318 to operate the at least third modular energy storage string 310 in the direct current mode. The plurality of energy sources 302, 312, 318 may be the same type of energy source or may comprise different types of energy sources. Also, the respective power converter module 304, 314, 320 of the respective modular energy storage string 300, 308, 310 may be of the same type or may comprise different types of power converter modules. However, in the case of Fig. 3, and the further Figs. 4 to 28, the second and the third modular energy storage string 308, 310 being equivalently configured to the at least first modular energy storage string 300.

In the alternating current mode, the first modular energy storage string 300 is connectable to the first phase 306 of the three-phase power grid 106 by a first grid contactor 324. Alternatively or in addition, in the alternating current mode, the second modular energy storage string 308 is connectable to the second phase 316 of the three-phase power grid 106 by a second grid contactor 326. Alternatively or in addition, in the alternating current mode, the third modular energy storage string 310 is connectable to a third phase 322 of the three-phase power grid 106 by a third grid contactor 328.

In a direct current mode, the first and/or the second and/or the third modular energy storage string 300, 308, 310 is/are configured for providing at least a charging function for a direct current charging operation and/or at least a power boosting function for a direct current charging operation, respectively. Particularly, each of the strings 300, 308, 310 may be configured individually to provide such an additional function for a direct current charging operation. In the alternative or additionally, at least two of the at least three strings 300, 308, 310 may be connected to provide such an additional function for a direct current charging operation and/or to attain the possibility of providing such an additional function at multiple different voltage levels.

According to Fig. 3, the first to the third modular energy storage string 300, 308, 310 may be connectable with one another on a grid-connecting side of the respective multilevel converter 112. For providing such a connectability among the modular energy storage strings 300, 308, 310, Fig. 3 shows two different options, one for the lower multilevel converter 112 and an alternative or equivalent one for the upper multilevel converter 112. The two options are named as A and B in Fig. 3.

According to string connection option A, the first modular energy storage string 300 is connectable with the second modular energy storage string 308 via at least a first string contactor 330. Furthermore, the second modular energy storage string 308 is connectable with the third modular energy storage string 310 via at least a second string contactor 332. Also, according to Fig. 3, the respective first to third modular energy storage strings 300, 308, 310 connected to a common star point 334. The contactors 330 and 332 are directly placed, at the grid-connecting side of the upper multilevel converter 112, between the respective strings 300, 308, 310. From the first modular energy storage string 300, a first terminal connection 333 is drawn outwardly and comprises a terminal contactor 335 for opening or closing the first terminal connection 333. From the common star point 334, a second terminal connection 336 is drawn outwardly. The second terminal connection 336 may also be used to interconnect the two multilevel converters 112 to the multilevel converter system 114. Therefore, a multilevel converter contactor 337 may be provided at the second terminal connection 336, particularly for interconnecting the at least two multilevel converters 112 to the common star point 334 to provide the multilevel converter system 114.

According to string connection option B, the first modular energy storage string 300 is connectable with the second modular energy storage string 308 via the first string contactor 330 and the second string contactor 332, particularly, by closing both the first and the second string contactor 330, 332. Furthermore, the second modular energy storage string 308 is connectable with the third modular energy storage string 310 via at least the second string contactor 332 and a third string contactor 338, particularly, by closing both the second and the third string contactor 332, 338. Also, the first modular energy storage string 300 is connectable with the third modular energy storage string 310 via at least the first string contactor 330 and a third string contactor 338, particularly, by closing both the first and the third string contactor 330, 338. According to the shown option B, on the grid-connecting side of the lower multilevel converter 112, the contactors 330, 332 and 338 are pulled or moved outwards towards the first terminal connection 333 via corresponding current taps on the grid-connecting side of the respective string. Furthermore, as already mentioned for option A, from the common star point 334, the second terminal connection 336 is drawn outwardly. According to option B, the string contactors 330, 332, 338 can be used as respective, string individual terminal contactors, preferably for opening and/or closing the terminal connection 333 in a string individual manner.

Further to Fig. 3, the first energy storage string 300 of the respective multilevel converter 112 comprises a first grid filter 340 arranged between the first grid contactor 324 and a respective first one of the plurality of energy sources 302 of the first energy storage string 300, regarded from the grid-connecting side. The second energy storage string 308 comprises a second grid filter 342 arranged between the second grid contactor 326 and a respective first one of the plurality of energy sources 312 of the second energy storage string 308. The third energy storage string 310 comprises a third grid filter 344 arranged between the third grid contactor 328 and a respective first one of the plurality of energy sources 318 of the third energy storage string 310. According to Fig. 3, the respective string contactors 330, 332, 338 are positioned between the respective grid contactors 324, 326, 328 and the respective grid filters 340, 342, 344.

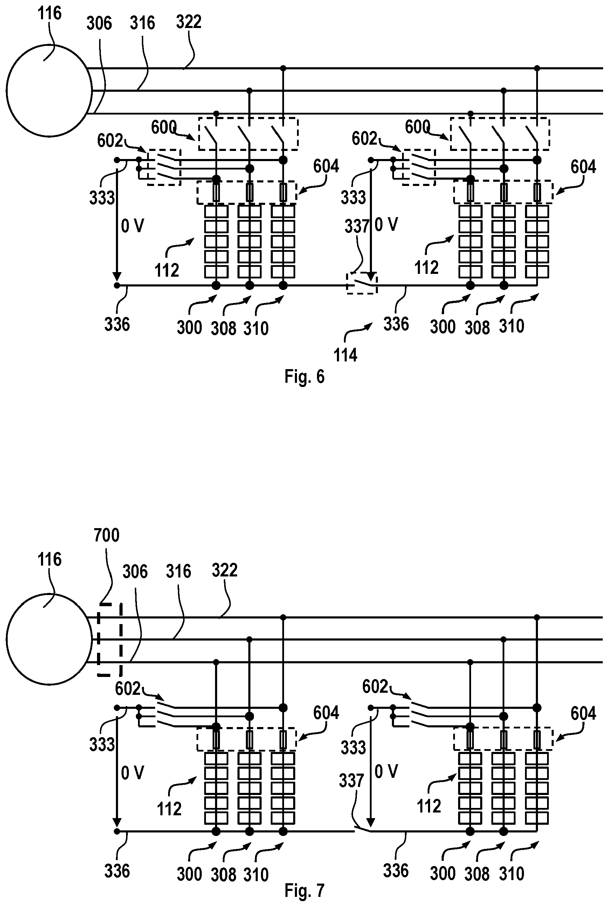

It should be understood that the detailed structure of a multilevel converter 112 is shown in Fig. 3 in conjunction with Fig. 28, and that in the following Figs. 6 to 28, for the sake of clarity, not all reference signs from Fig. 3 are shown repeatedly. Only the main components are shown. Furthermore, those features in which the figures differ from each other and/or particularly from Fig. 3 are discussed and shown in detail.

Fig. 4 and 5 show two further refinements of the multilevel converter system 114 connected or connectable with the three-phase power grid 106. Each of the multilevel converters 112 shown in Fig. 4 and 5 may be configured as at least one of the multilevel converters 112 of the multilevel converter system 114 of Fig. 3.

According to Fig. 4, at least two multilevel converters 112 may be interconnectable and may therefore interact with one another, particularly for synchronization and/or power connection purposes. In further refinements, more than two multilevel converters 112 may interact as subsystems. Each of the multilevel converters 112 is provided with exemplary two pairs of terminal connections 400, 402. It should be noted that it may be possible to combine and/or interconnect terminal connections 400, 402 across the subsystem pairings and/or gatherings of multilevel converters 112.

Fig. 5 shows, a refinement, in which the respective multilevel converters 112 of the multilevel converter system 114 are not interconnected and/or paired and/or gathered into subsystem multilevel converters 112.

Fig. 6 shows a refinement of the multilevel converter system 114 comprising two multilevel converters 112 corresponding to the lower presented multilevel converter 112 of Fig. 3. Thus, the description provided for said multilevel converter generally applies here as well. The two multilevel converters 112 can be connected via the multilevel converter contactor 337 to the common star point 334. The grid contactors 324, 326, 328 (see Fig. 3) are collectively indicated as a grid contactor arrangement 600. In the same manner, the string contactors 330, 332, 338, which, according to the shown refinement, serve as string individual terminal contactors, are collectively indicated as a string contactor arrangement 602. In the same manner, the grid filters 340, 342, 344 are collectively indicated as a grid filter arrangement 604. In the shown refinement of Fig. 6, all contactors are in an open position. Therefore, the multilevel converters 112 are not connected to one another, not connected to the power grid 106. Also, the respective terminals 333 are opened. Therefore, no voltage can be measured between the terminal connections 333, 336 (indicated by 0 V).

Fig. 7 generally shows a refinement of Fig. 6, in which the respective grid contactors of the grid contactor arrangement 600 are closed. Thereby, Fig. 7 shows a switching configuration of an AC-operation of the multilevel converter system 114. Only as an example, a transformer unit 700 is provided on the power grid 106. It is to be noted that such a transformer unit 700 may be applied each of the herein disclosed embodiments. The transformer unit 700 may be interconnectable between the three-phase power grid 106 and the at least one multilevel converter 112 and/or the at least one multilevel converter system 114.

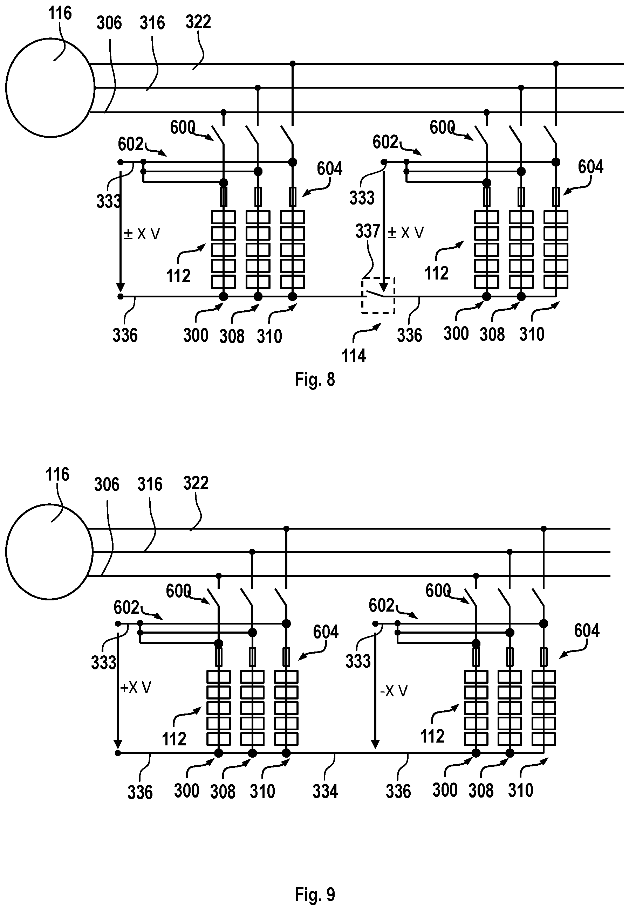

According to Fig. 8 shows the refinement of Fig.6, wherein all grid contactors 324, 326, 328 of the respective multilevel converter 112 are opened, wherein all string contactors 330, 332, 338 are closed, and wherein the multilevel converter contactor 337 remains opened. In this setup, a DC voltage of ± X Volt can be measured between each of the terminals 333, 336 of the respective multilevel converter 112. Said DC voltage may be used for a DC charging operation and/or for providing a DC boost for such a charging operation.

According to Fig. 9, in comparison with Fig. 8, the multilevel converter contactor 337 is in a closed position. Thereby, the two multilevel converters are connected to the common star-point 334. Particularly, if the energy sources of the respective strings 300, 308, 310 of one of the multilevel converters 112 are connected in series negative, whereas the energy sources of the respective strings 300, 308, 310 of the other one of the multilevel converters 112 are connected in series positive, a voltage of 2X Volt can be measured between the two terminals 333 (indicated by -X V and +X V in Fig. 9).

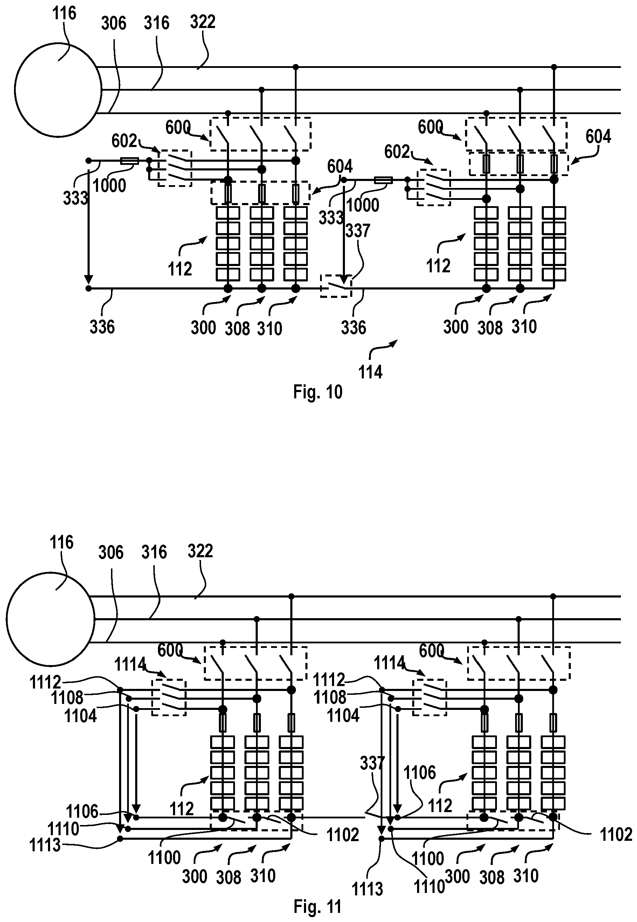

Fig. 10 generally corresponds to the refinement shown in Fig. 6. However, in contrast to Fig. 6, the refinement of the multilevel converter system 114 shows a configuration, in which the terminal connections 333 are provided with respective terminal filters 1000. The terminal filters 1000 may be configured to filter an output current and/or an output voltage at the respective terminals.. The terminal filters are provided after the respective string contactor arrangement 602. Furthermore, Fig. 10 differs from the refinement shown in Fig. 6 in that one of the grid filter arrangements 604 is placed directly between the grid contactor arrangement 600 and the string-individual power tapping to the terminal connection 333. In this manner, at least one of the grid filters 340, 342, 344 of the grid filter arrangements 604 may be at least partly bypassed.

Fig. 11 shows a refinement of the multilevel converter system 114, in which the first modular energy storage string 300 is connectable in series with at least the second modular energy storage string 308 via at least a fourth string contactor 1100, and in which the second modular energy storage string 308 is connectable in series with at least the third modular energy storage string 310 via at least a fifth string contactor 1102. According to this refinement, the first modular energy storage string 300 comprises at least two terminal connections 1104, 1106, the terminal connections 1104, 1106 configured for, in the direct current mode, providing a direct current output. Also, the second modular energy storage string 308 comprises at least two terminal connections 1108, 1110, the terminal connections 1108, 1110 configured for, in the direct current mode, providing a direct current output. Furthermore, the third modular energy storage string 310 comprises at least two terminal connections 1112, 1113, the terminal connections 1112, 1113 configured for, in the direct current mode, providing a direct current output. A respective first terminal connection 1104, 1108, 1112 is provided on a grid connecting side of the respective first and/or second and/or third modular energy storage string 300, 308, 310. A respective second terminal connection 1106, 1110, 1113 is provided at the common star point 334. In this manner, a DC output can be provided individually for each modular energy storage string 300, 308, 310. Instead of the string contactor arrangement 602 shown in the before Figs., in the refinement of Fig. 11, each terminal connection 1104, 1108, 1112 comprises at least one terminal contactor (not indicated individually). The terminal contactors are collectively indicated as a terminal contactor arrangement 1114. In other configurations, the terminal contactor arrangement 1114 may only comprise one terminal contactor instead of multiple terminal contactors.

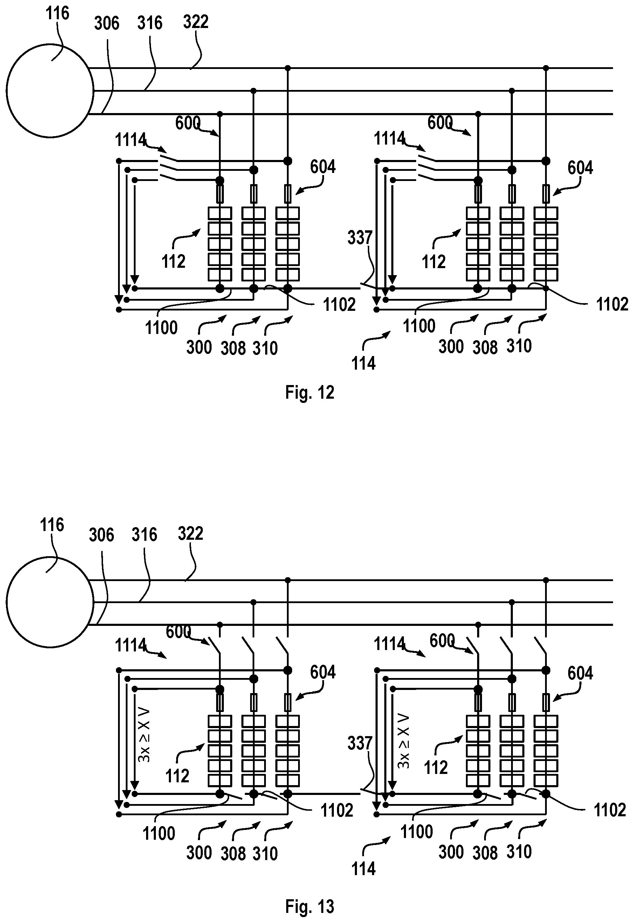

Fig. 12 generally shows the refinement of Fig. 11, in which the respective grid contactors of the grid contactor arrangement 600 are closed. Thereby, Fig. 12 shows a switching configuration of an AC-operation of the multilevel converter system 114. Furthermore, the fourth and the fifth string contactors 1100, 1102 are closed so that the modular energy storage string 300, 308, 310 are connected to the common star point 334. The respective terminal contactor arrangement 1114 of the respective multilevel converter 112 remains opened. The multilevel converter contactor 337 remains open. In this configuration, each multilevel converter 112 is connected to the power grid 106. For clarity reasons, the string individual terminal connections are not shown again in Fig. 12. In this context, it is explicitly referred to Fig. 11.

Fig. 13 generally shows the refinement of Fig. 11, in which the respective grid contactors of the grid contactor arrangement 600 are opened. Thus, the respective multilevel converter 112 is disconnected from the power grid 106. Furthermore, the fourth and the fifth string contactors 1100, 1102 are opened. The respective terminal contactor arrangement 1114 of the respective multilevel converter 112 is closed. The multilevel converter contactor 337 remains open. In this manner, for each modular energy storage string 300, 308, 310, a DC power output can be provided between each pair of terminal connections of each modular energy storage string 300, 308, 310. Thus, per multilevel converter 112, 3.0 times X Volt can be provided for a charging function and/or a boosting function.

It should be noted that X Volt may be the maximum output voltage providable per modular energy storage string 300, 308, 310, respectively.

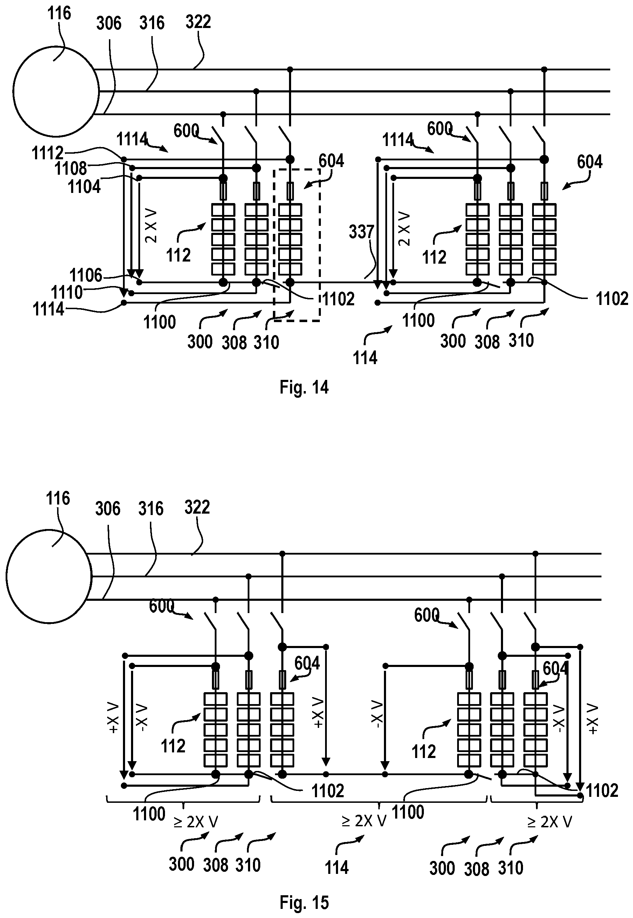

Fig. 14 generally shows the refinement of Fig. 13, wherein, in the left-side multilevel converter 112, the fourth string contactor 1100 is closed and the fifth string contactor 1102 is opened, and wherein in the right-side multilevel converter 112, the fourth string contactor 1100 is opened and the fifth string contactor 1102 is closed. Furthermore, the multilevel converter contactor 337 is closed. In this configuration, a voltage of X Volt may be derived at the respective terminal output. In this manner, the first and the second modular energy storage string 300, 308 of the left-side multilevel converter 112 are connected in series, wherein the output voltage of 2.0 times X Volt may be derived between the terminal connections 1104, 1108 of the left-side multilevel converter. Also, the third modular energy storage string 310 of the left-side multilevel converter 112 is connected via the multilevel converter contactor 337 with the first modular energy storage string 300 of the right-side multilevel converter 112, wherein the output voltage of 2.0 times X Volt may be derived between the terminals 1104 of the right-side multilevel converter 112 and the terminal connection 1112 of the left-side multilevel converter 112. Also, the second and the third modular energy storage string 308, 310 of the right-side multilevel converter 112 are connected in series, wherein the output voltage of 2.0 times X Volt may be derived between the terminal connections 1108, 1112 of the right-side multilevel converter 112.

Fig. 15 shows the same setup as Fig. 14, with the difference that the voltage outputs of the respectively connected modular energy storage strings are indicated in a different fashion to enhance clarity.

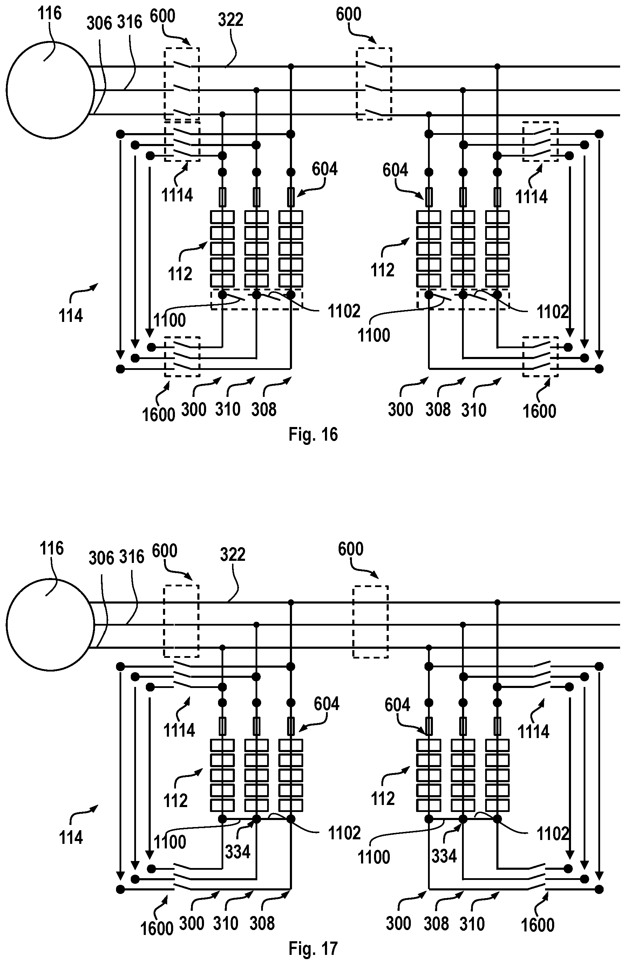

Fig. 16 shows a further refinement of the multilevel converter system 114. The respective multilevel converters 112 are configured in a similar fashion as shown in and described in Fig. 11. However, in contrast to the refinement shown in Fig. 11, no multilevel converter contactor 337 is provided between the two exemplarily shown multilevel converters 112. Instead, two grid contactor arrangements 600 are placed at the grid-top side, preferably directly at the respective phases 306, 316, 322 of the power grid 106. One grid contactor arrangement 600 (also named left-sided grid contactor arrangement) is placed before the respective power tappings for the modular energy storage string 300, 308, 310 of the left-side multilevel converter 112. The second grid contactor arrangement 600 (also named right-sided grid contactor arrangement) is placed before the respective power tappings for the modular energy storage string 300, 308, 310 of the right-side multilevel converter 112. In this fashion, if the grid contactors of the left-sided grid contactor arrangement 600 are opened, the multilevel converter system 114 is disconnected from the grid as a whole. Furthermore, if at least one of the grid contactors of the right-sided grid contactor arrangement 600 is closed, at least one of the modular energy storage string 300, 308, 310 of the left-side multilevel converter 112 may be connectable with at least one of the modular energy storage string 300, 308, 310 of the right-side multilevel converter 112. Thus, the left-sided grid contactor arrangement 600 may replace the function of the multilevel converter contactor 337. Furthermore, according to the refinement shown in Fig. 16, the respective multilevel converter 112 comprises not only the terminal contactor arrangement 1114 on the grid-connecting side of the respective multilevel converter 112, but also a further terminal contactor arrangement 1600 that is provided at the respective terminals at the common star point side of the respective multilevel converter 112. The respective fourth and fifth string contactors 1100, 1102 are opened. The respective terminal contactors of the respective terminal contactor arrangement 1114, 1600 remain open.

Fig. 17 generally shows the refinement of Fig. 16, in which the respective grid contactors of the two grid contactor arrangements 600 are closed. Thereby, Fig. 17 shows a switching configuration of an AC-operation of the multilevel converter system 114. Furthermore, the respective fourth and fifth string contactors 1100, 1102 are closed. The respective terminal contactors of the respective terminal contactor arrangement 1114, 1600 remain open. In this way, the two multilevel converters 112 are in grid connection. The respective modular energy storage strings 300, 308, 310 are connected to the common star point 334.

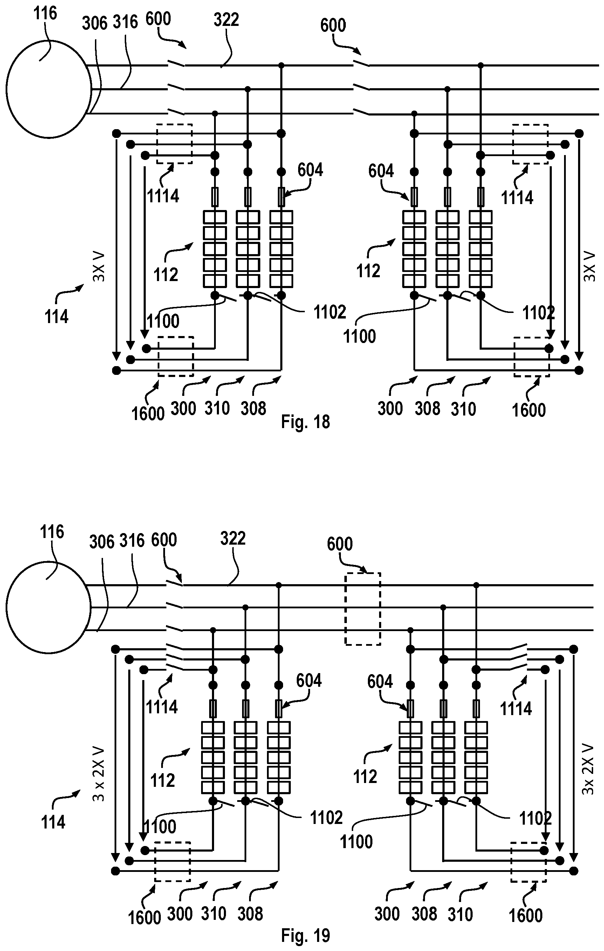

Fig. 18 generally shows the refinement of Fig. 16, wherein the respective terminal contactors of the respective terminal contactor arrangement 1114, 1600 are closed.

In this manner, for each modular energy storage string 300, 308, 310, per multilevel converter, a DC power output can be provided between each pair of terminal connections of each modular energy storage string 300, 308, 310. Thus, per multilevel converter 112, 3.0 times X Volt can be provided for a charging function and/or a boosting function.

Fig. 19 generally shows the refinement of Fig. 16, wherein the respective grid contactors of right-sided grid contactor arrangement 600 are closed, whereas the respective grid contactors of left-sided grid contactor arrangement 600 remain open, so that the multilevel converter system 114 is disconnected from the grid. The respective terminal contactors of the respective terminal contactor arrangement 1114 are opened, whereas the respective terminal contactors of the respective terminal contactor arrangement 1600 are closed. The respective fourth and fifth string contactors 1100, 1102 are opened. In this fashion, the first modular energy storage string 300 of the left-side multilevel converter 112 is connected via a grid contactor of the right-sided grid contactor arrangement 600 with the first modular energy storage string 300 of the right-side multilevel converter 112 in series. Also, the second modular energy storage string 308 of the left-side multilevel converter 112 is connected via a grid contactor of the right-sided grid contactor arrangement 600 with the second modular energy storage string 300 of the right-side multilevel converter 112 in series. Furthermore, the third modular energy storage string 310 of the left-side multilevel converter 112 is connected via a grid contactor of the right-sided grid contactor arrangement 600 with the first modular energy storage string 310 of the right-side multilevel converter 112 in series. In this manner, a DC power output can be provided between the respectively closed terminal connections of the interconnected modular energy storage strings. Thus, 3.0 times 2X Volt can be provided for a charging function and/or a boosting function.

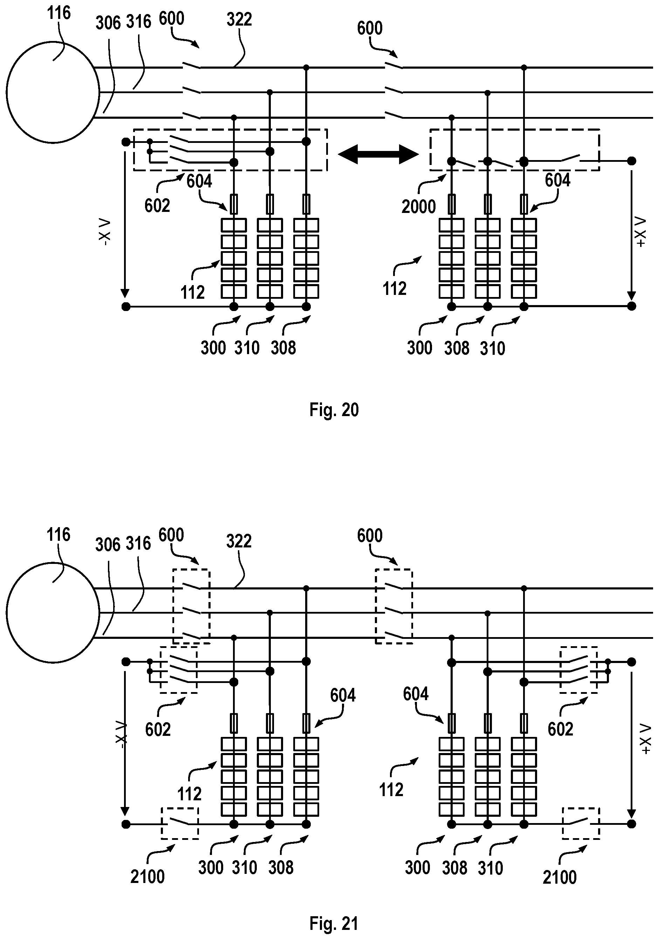

Fig. 20 generally shows a refinement of the multilevel converter system 114 shown in Fig. 3. However, similar to Fig. 16, the multilevel converter contactor 337 is replaced by the further right-sided grid contactor arrangement 600. Also, similar to Fig. 16, the left-sided grid contactor arrangement 600 is placed right before the respective power tappings for the modular energy storage string 300, 308, 310 of the left-side multilevel converter 112. As already explained in detail for Fig. 3, the left-side multilevel converter 112 comprises the string contactor arrangement 602 including the string contactors 332, 334, 338, whereas the left-side multilevel converter 112 comprises the string contactors 332, 334. The string contactors 332, 334 together with the terminal contactor 335 of the left-side multilevel converter can be summarized as the string contactor arrangement 2000. The string contactor arrangement 602 and 2000 refer to technically equivalent options.

Fig. 21 shows a refinement of the multilevel converter system 114, in which the left-side multilevel converter corresponds to the configuration of the right-side multilevel converter 112 configuration of Fig. 20, especially to the configuration of the string contactor arrangement 602. Furthermore, on the common terminal connection at the common star point side of the respective multilevel converter 112, there is provided a further terminal contactor 2100.

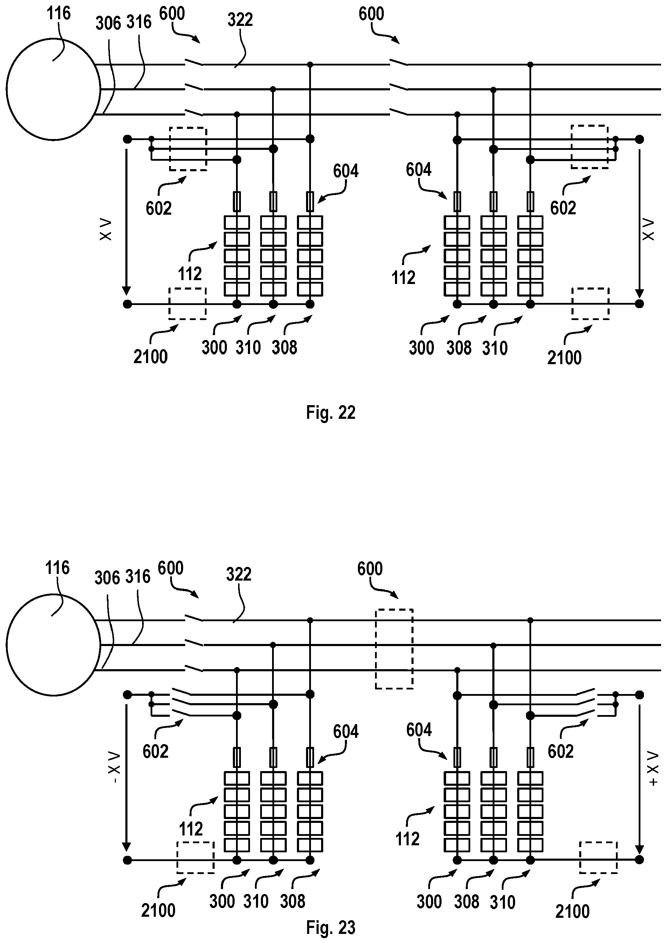

Fig. 22 generally shows the refinement of Fig. 21, wherein the respective string contactors of the respective string contactor arrangement 602 are closed. Furthermore, the respective terminal contactors 2100 are closed. The respective grid contactors of the respective grid contactor arrangement 600 remain open. In this manner, the first to third modular energy storage string 300, 308, 310 of the respective multilevel converter 112 are connected in parallel and a DC output voltage of X Volt can be derived at the respective two terminal connections of the respective multilevel converter 112.

Fig. 23 generally shows the refinement of Fig. 21, wherein the respective string contactors of the respective string contactor arrangement 602 are opened. The respective terminal contactors 2100 are closed. Furthermore, the respective grid contactors of the right-sided grid contactor arrangement 600 are closed. In this fashion, the first modular energy storage string 300 of the left-side multilevel converter 112 is connected via a grid contactor of the right-sided grid contactor arrangement 600 with the first modular energy storage string 300 of the right-side multilevel converter 112 in series. Also, the second modular energy storage string 308 of the left-side multilevel converter 112 is connected via a grid contactor of the right-sided grid contactor arrangement 600 with the second modular energy storage string 300 of the right-side multilevel converter 112 in series. Furthermore, the third modular energy storage string 310 of the left-side multilevel converter 112 is connected via a grid contactor of the right-sided grid contactor arrangement 600 with the first modular energy storage string 310 of the right-side multilevel converter 112 in series. The series connected first modular energy storage strings 300 are connected in parallel with the series connected second modular energy storage strings 308 and the third modular energy storage strings 310. In this manner, a DC power output can be provided between the respectively closed terminal connections 2100 of the two multilevel converters 112. Thus, 1.0 times 2X Volt can be provided for a charging function and/or a boosting function.

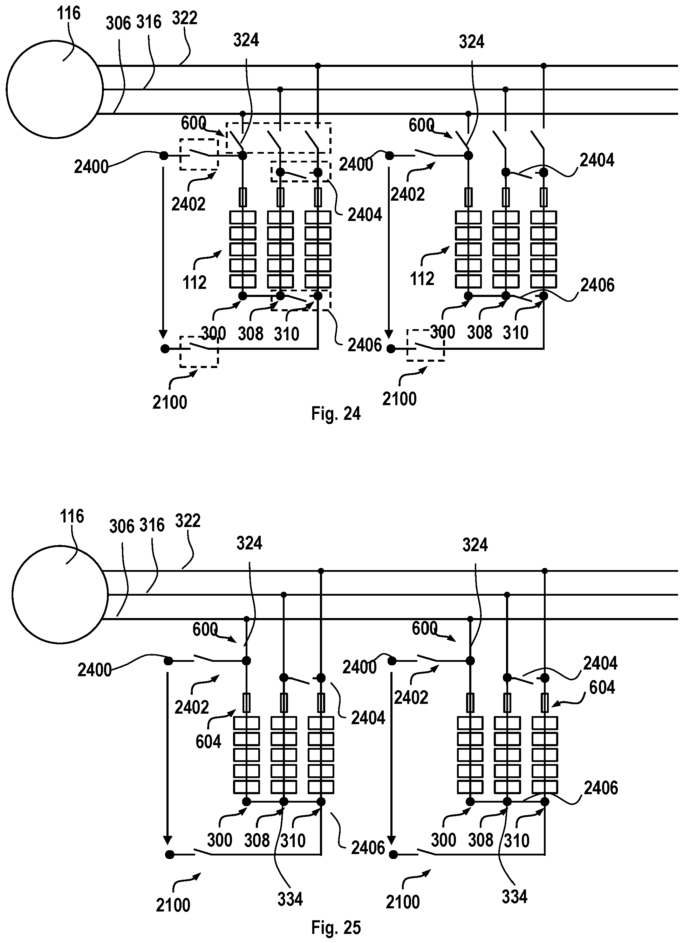

Fig. 24 shows a further refinement of a multilevel converter system 114. The left-side multilevel converter 112 corresponds to the right-side multilevel converter 112. Each multilevel converter 112 comprises the grid contactor arrangement 600 that is exemplarily placed after the respective power tappings from the first to third phase 306, 316, 322 of the power grid 106 to the first to third modular energy storage strings 300, 308, 310 (similar to Fig. 6). Furthermore, the respective first modular energy storage strings 300 comprises a terminal connection 2400 that is tapped right after the grid contactor 324 of the first phase 306. The terminal connection 2400 comprises a terminal contactor 2402. Furthermore, at the grid-connecting side of the respective multilevel converter 112, the second modular energy storage string 308 is connectable with the third modular energy storage strings 310 via a further string contactor 2404. Also, at the common star point side of the respective multilevel converter 112, the second modular energy storage string 308 is connectable with the third modular energy storage strings 310 via a further string contactor 2406. In this manner, the respective first to third modular energy storage strings 300, 308, 310 may be connectable in series (i.e., by closing the string contactor 2404) and/or the second and third modular energy storage strings 308, 310 may be connectable in parallel (i.e., by closing both string contactors 2404, 2406) and/or at least one of the second or third modular energy storage strings 308, 310 may be bypassed (i.e., by closing the string contactor 2406). It shall be understood that the contactor 2406 may be configured to disconnect the third modular energy storage string 310 from the common star point 334. Also, in grid connection of the respective multilevel converter 112, by closing the respective string contactor 2406, and leaving open the respective string contactor 2404, the respective first to third modular energy storage string 300, 308, 310 can be connected to the common star point 334 (see Fig. 25).

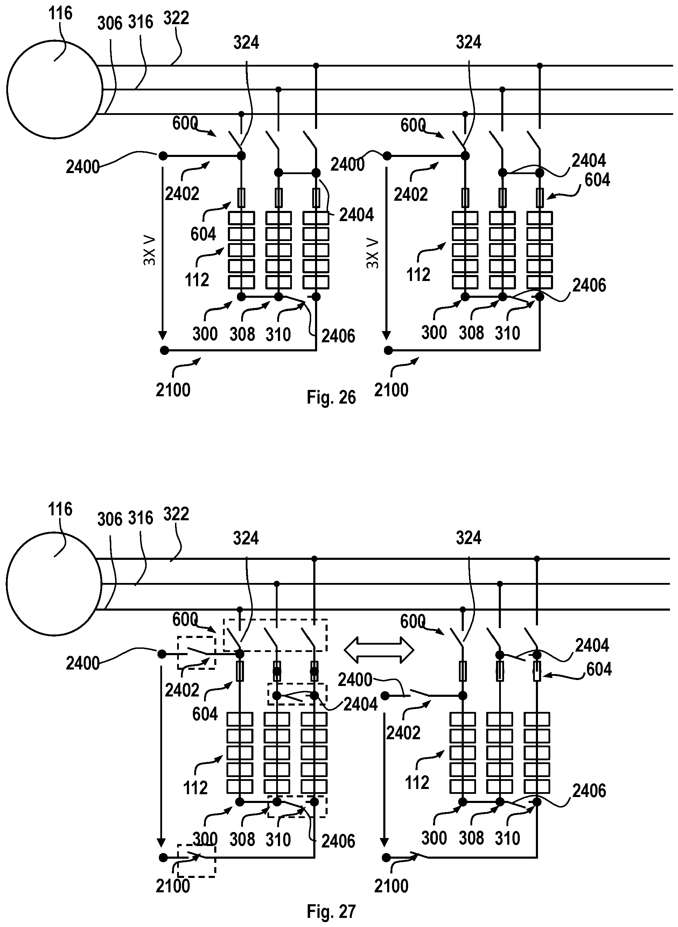

Fig. 26 generally shows the refinement of Fig. 24, wherein the respective grid contactors of the respective grid contactor arrangement 600 are opened. The respective terminal contactors 2100, 2402 are closed. The respective string contactor 2404 is closed, whereas the string contactor 2406 is opened. In this manner, the respective first to third modular energy storage strings 300, 308, 310 are connected in series. In this manner, a DC power output can be provided between the respective pair of closed terminal connections 2100, 2402 of the two multilevel converters 112. Thus, 2.0 times 3X Volt can be provided for a charging function and/or a boosting function.

Fig. 27 shows a further refinement of the multilevel converter system 114. The general configurations of the respective multilevel converter 112 corresponds to the configurations shown in Figs. 24-26. However, in the configuration of the left-side multilevel converter 112, the string contactor 2404 is placed after the respective grid filters of the grid filter arrangement 604. In this manner, at least one of the grid filters of the grid filter arrangement 604 provided at the second and third modular energy storage string 308, 310 of the left-side multilevel converter 112 may be at least partly bypassed by closing the string contactor 2404. Furthermore, in the configuration of the right-side multilevel converter 112, the terminal connection 2400 is placed after the grid filter of the grid filter arrangement 604 provided at the first modular energy storage string 300. In this manner, the grid filter provided at the first modular energy storage string 300, preferably before the first energy storage module, may be at least partly bypassed.

Fig. 28 shows a potential switching setup for the power converter module 304 that exemplarily includes four switching elements 2800. Two respective switching elements 2800 are provided per module string 2802, 2804 of the exemplary power converter module 304 in series connection. Between each of the two switching elements per string 2802, 2804 a respective further terminal connection 2806, 2808 is provided. The terminal connections 2806, 2808 may be used to modularly connect multiple power converter module 304 together.

It shall be noted that the switching topology may be selected with respect to filtering requirements on an AC-side and a DC-side of the multilevel converter system. The more filtering capability is required on the DC-side, the more inductors may be involved in the DC configuration.

### LIST OF REFERENCE SIGNS

- 100: charging system
- 102: electrical energy storage
- 104: electrical consumer
- 106: power grid
- 108: front-end converter unit
- 110: direct current charging unit
- 112: multilevel converter
- 114: multilevel converter system
- 115: outputs
- 116: DC/DC converter
- 118: outputs
- 200: outputs
- 300: modular energy storage string
- 302: plurality of energy sources
- 304: power converter module
- 306: phase
- 308: modular energy storage string
- 310: modular energy storage string
- 312: plurality of energy sources
- 314: power converter module
- 316: phase
- 318: plurality of energy sources
- 320: power converter module
- 322: phase
- 324: grid contactor
- 326: grid contactor
- 328: grid contactor
- 330: string contactor
- 332: string contactor
- 333: terminal connection
- 334: star point
- 335: terminal contactor
- 336: terminal connection
- 337: multilevel converter contactor
- 338: string contactor
- 340: grid filter
- 342: grid filter
- 344: grid filter
- 400: terminal connections
- 402: terminal connections
- 600: grid contactor arrangement
- 602: string contactor arrangement
- 604: grid filter arrangement
- 800: transformer unit
- 1000: terminal filter
- 1100: string contactor
- 1102: string contactor
- 1104: terminal connection
- 1106: terminal connection
- 1108: terminal connection
- 1110: terminal connection
- 1112: terminal connection
- 1113: terminal connection
- 1114: terminal contactor arrangement
- 1600: terminal contactor arrangement
- 2100: terminal contactor
- 2400: terminal connection
- 2402: terminal contactor
- 2404: string contactor
- 2406: string contactor
- 2800: switching element
- 2802: module string
- 2804: module string
- 2806: terminal connection
- 2808: terminal connection

## Claims

1. A grid-connectable multilevel converter (112) configured for at least temporarily interfacing a three-phase power grid (106) and/or for at least temporarily providing a direct current mode;
the multilevel converter (112) comprising:
at least a first modular energy storage string (300) having a plurality of energy sources (302) and at least one power converter module (304), the at least one power converter module (304) comprising at least two switching elements (2900);
the at least two switching elements (2900) being configured for selectively switching each of the plurality of energy sources (302) to operate the at least first modular energy storage string (300) in an alternating current mode, in which the at least first modular energy storage string (300) is connectable to a first phase (306) of the three-phase power grid (106); and
the at least two switching elements (2900) being configured for selectively switching each of the plurality of energy sources (302) to operate the at least first modular energy storage string (300) in the direct current mode.

2. The multilevel converter (112) according to claim 1,
wherein the at least two switching elements (2900) being configured for selectively switching each of the plurality of energy sources (302) at least temporarily in series positive and/or in series negative and/or in a positive bypass state and/or in a negative bypass state and/or in parallel to operate the at least first modular energy storage string (300) in an alternating current mode; and/or
wherein the at least two switching elements (2900) being configured for selectively switching each of the plurality of energy sources (302) at least temporarily in series positive and/or in series negative and/or in a positive bypass state and/or in a negative bypass state and/or in parallel to operate the at least first modular energy storage string (300) in the direct current mode.

3. The multilevel converter (112) according to claim 1 or 2, further comprising:
at least a second modular energy storage string (308) and/or a third modular energy storage string (310),
the second and/or the third modular energy storage string (308, 310) being equivalently configured to the at least first modular energy storage string (300), wherein, in the alternating current mode, the second modular energy storage string (308) is connectable to a second phase (316) of the three-phase power grid (106), and/or
wherein, in the alternating current mode, the third modular energy storage string (310) is connectable to a third phase (322) of the three-phase power grid (106);
wherein, in a direct current mode, the first and/or the second and/or the third modular energy storage string (300, 308, 310) is configured for providing a charging function for a direct current charging operation and/or a power boosting function for a direct current charging operation, respectively.

4. The multilevel converter (112) according to claim 3,
wherein the first modular energy storage string (300) is connectable with the second modular energy storage string (308) via at least a first string contactor (330, 332); and/or
wherein the second modular energy storage string (308) is connectable with the third modular energy storage string (310) via at least a second string contactor (332, 338); and/or
wherein the first modular energy storage string (300) is connectable with the third modular energy storage string (310) via at least a third string contactor (332, 338); and/or
wherein the first to the third modular energy storage string (300, 308, 310) is connectable or connected to a common star point (334).

5. The multilevel converter (112) according to claim 3 or 4,
wherein the first modular energy storage string (300) is connectable in series with at least the second modular energy storage string (308) via at least a fourth string contactor (1100); and/or
wherein the second modular energy storage string (308) is connectable in series and/or in parallel with at least the third modular energy storage string (310) via at least a fifth string contactor (1102, 2404, 2406).

6. The multilevel converter (112) according to any one of the preceding claims,
wherein the at least first modular energy storage string (300) is connectable to the first phase (306) of the three-phase power grid (106) by a first grid contactor (324); and/or
wherein the at least second modular energy storage string (308) is connectable to the second phase (316) of the three-phase power grid (106) by a second grid contactor (326); and/or
wherein the at least third modular energy storage string (310) is connectable to the third phase (322) of the three-phase power grid (106) by a third grid contactor (328).

7. The multilevel converter (112) according to any one of the preceding claims,
wherein the first modular energy storage string (300) comprises at least two terminal connections (1104, 1106), the terminal connections (1104, 1106) configured for, in the direct current mode, providing a direct current output; and/or
wherein the second modular energy storage string (308) comprises at least two terminal connections (1108, 1110), the terminal connections (1108, 1110) configured for, in the direct current mode, providing a direct current output; and/or
wherein the third modular energy storage string (310) comprises at least two terminal connections (1112, 1113), the terminal connections (1112, 1113) configured for, in the direct current mode, providing a direct current output.

8. The multilevel converter (112) according to claims 4 and 7,
wherein a respective first terminal connection (1104, 1108, 1112) of the at least two terminal connections (1104, 1106, 1108, 1110, 1112, 1113) is provided on a grid connecting side of the respective first and/or second and/or third modular energy storage string (300, 308, 310), and
wherein a respective second terminal connection (1106, 1110, 1113) of the at least two terminal connections (1104, 1106, 1108, 1110, 1112, 1113) is provided at the common star point (334).

9. The multilevel converter (112) according to claim 7 or 8,
wherein each of the at least two terminal connections (1104, 1106, 1108, 1110, 1112, 1113) of the respective first and/or second and/or third modular energy storage string (300, 308, 310) is operable via a respective terminal contactor (1114, 2100, 2402).

10. The multilevel converter according to claim 6,
wherein the first energy storage string (300) comprises a first grid filter (340) arranged between the first grid contactor (324) and a respective first one of the plurality of energy sources (302) of the first energy storage string (300); and/or
wherein the second energy storage string (308) comprises a second grid filter (342) arranged between the second grid contactor (326) and a respective first one of the plurality of energy sources (312) of the second energy storage string (308); and/or
wherein the third energy storage string (310) comprises a third grid filter (344) arranged between the third grid contactor (328) and a respective first one of the plurality of energy sources (318) of the third energy storage string (310); and/or
wherein at least one of the least two terminal connections (333, 1104, 1108, 1112) of the first and/or second and/or third modular energy storage string (300, 308, 310) is connected to at least partly bypass the first and/or second and/or third grid filter (340, 342, 344).

11. The multilevel converter according to any of claims 7 to 9,
wherein at least one terminal filter (1000) is provided on at least one of the terminal connections (333) of the respective first and/or second and/or third modular energy storage string (300, 308, 310).

12. A multilevel converter system (114) comprising at least two multilevel converters (112) according to any one of the preceding claims,
wherein the at least two multilevel converters (112) are connectable via at least one multilevel converter contactor (337).

13. Charging system (100) for direct current charging and/or discharging of an electrical energy storage (102) of at least one electrical consumer (104),
the charging system (100) comprising:
the at least one electrical consumer (104) including the electrical energy storage (102);
a three-phase power grid (106);
a front-end converter unit (108) connectable to the three-phase power grid (106) and configured for inverting an alternating current of the three-phase power grid (106) to a direct current used for charging the electrical energy storage (102); and
a direct current charging unit (110) connectable to the front-end converter unit (108);
the electrical energy storage (102) being at least temporarily connectable to the direct current charging unit (110) to perform a direct current charging operation; and
at least one multilevel converter (112) of any one of claims 1 to 11 and/or at least one multilevel converter system (114) of claim 12.

14. Charging system (100) of claim 13,
wherein, in the direct current mode, the at least one multilevel converter (112) and/or the at least one multilevel converter system (114) being at least temporarily connectable in parallel to the direct current charging unit (110) for providing a power boosting function for the direct current charging operation; or
wherein, in the direct current mode, the at least one multilevel converter (112) and/or the at least one multilevel converter system (114) being at least temporarily connectable in parallel to the front-end converter unit (108) for providing a power boosting function for the direct current charging operation.

15. Charging system (100) of claim 13 or 14,
the charging system (100) comprising a transformer unit (700),
the transformer unit (700) being interconnectable between the three-phase power grid (106) and the at least one multilevel converter (112) and/or the at least one multilevel converter system (114).
